# FASCICULE DE BREVET EUROPEEN

(11) **EP 1 432 837 B1**
(45) Date de publication et mention de la délivrance du brevet: **09.01.2008**
(21) Numéro de dépôt: 01974406.9
(22) Date de dépôt: 28.09.2001
(51) Int. Cl.: C22B 7/04, C21C 5/52, C21C 5/54, C04B 7/147, C04B 7/48, C04B 28/08, C21B 3/06

(54) **PREFABRICATION INTEGREE D'ELEMENTS EN BETON ARME INCLUANT LA PRODUCTION DE RONDS A BETON ET LA VALORISATION DU LAITIER PRODUIT**
INTEGRIERTE HERSTELLUNG VON STAHLBETONELEMENTEN MIT VALORISIERUNG DER BEI DER BETONSTAHLPRODUKTION ANFALLENDEN METALLURGISCHEN SCHLACKE
INTEGRATED PREFABRICATION OF REINFORCED CONCRETE ELEMENTS INCLUDING PRODUCTION OF CONCRETE REINFORCING BARS AND UPGRADING OF THE SLAG PRODUCED

(43) Date de publication de la demande: 30.06.2004
(73) Titulaire: Davene, Jean, 75006 Paris (FR); Barbe, Jacques, 42100 Saint Etienne (FR)
(72) Inventeur: Davene, Jean, 75006 Paris (FR); Barbe, Jacques, 42100 Saint Etienne (FR)
(74) Mandataire: Thurgood, Alexander John
(86) Numéro de dépôt international: PCT/FR2001/003006
(87) Numéro de publication internationale: WO 2003/029500

(56) Documents cités:
- EP-A- 0 605 378
- BE-A- 867 391
- DE-A- 3 301 427
- FR-A- 2 397 460
- FR-A- 2 492 077
- US-A- 4 725 307
- WOLF-DIETER ROPKE: "Application of state of the art technology for compact electric arc furnace steel plants" IRON AND STEEL ENGINEER, ASSOCIATION OF IRON AND STEEL ENGINEERS. PITTSBURGH, US, vol. 64, no. 5, mai 1987 (1987-05), pages 43-49, XP002155645 ISSN: 0021-1559

## Description

Les éléments préfabriqués en béton armé sont produits sur des « chantiers » fixes sur lesquels on trouve la centrale à béton, les moules et les stockages nécessaires en matières premières (rond à béton, ciment, agrégats).
Ces matières premières sont approvisionnées d'une part chez un aciériste pour le rond à béton et d'autre part chez un cimentier pour le ciment et enfin en agrégats chez un carrier pour des additions finales selon la composition souhaitée du béton et dont dépendent les caractéristiques de l'élément préfabriqué.

Les deux produits de cette fabrication demandant le plus de technicité sont le rond à béton et le ciment. L'exploitant de l'unité de préfabrication doit consacrer une attention particulière à contrôler ces deux matières étant donné la multiplicité des sources d'approvisionnement et ceci génère des coûts importants de gestion, de plus le coût du produit préfabriqué intègre des coûts importants de transports des matières premières.

La fabrication du rond à béton est bien connue : elle se fait aujourd'hui dans les aciéries électriques avec la fusion des ferrailles au four électrique, la coulée de l'acier en machine de coulée continue en billettes et l'obtention du produit final sur une installation de laminage assez couramment appelée train à fil.

La fabrication du ciment comporte le traitement de matières premières sélectionnées dans un four tournant pour obtenir un produit intermédiaire, le clinker, qui broyé, avec l'addition de composants adéquats donne le ciment.

Or la composition des laitiers d'aciérie s'apparente à celle d'un clinker à condition que certains oxydes indésirables en soient éliminés et que les corrections d'analyse pour certains composants soient réalisées.

Le laitier d'aciérie de conversion ou d'aciérie électrique, sous-produit de la fabrication de l'acier, est peu valorisé à l'heure actuelle du fait de sa composition, des variations de cette composition ainsi que des quantités relativement faibles disponibles ; quand il n'est pas valorisé il est mis en décharge. Cependant la réglementation qui impose de mettre en décharge contrôlée une quantité de laitier en augmentation constante, s'étend à tous les pays et le coût de cette opération devient un poste important du prix de revient de l'acier produit.

Des essais ont montré que l'opération de réduction des oxydes indésirables peut se faire dans un four électrique de réduction et que l'obtention d'un clinker est alors rendue possible et par ailleurs, l'ajustement de la composition d'un bain liquide d'oxydes métalliques, par fusion de matières premières minérales sélectionnées, est possible au four électrique de réduction pour faire d'un bain de laitier réduit le clinker de la composition pondérale recherchée. Ces enseignements nous sont donnés par exemple dans le brevet US 4,289,537.

Bien que le clinker produit lors de ces essais se soit avéré donner un ciment de haute qualité, ces expériences n'ont pas à ce jour entraîné de succès industriel parce que le procédé est considéré comme non rentable. En effet lors d'essais partiels destinés à vérifier la possibilité de réduction des laitiers et l'addition de matières minérales, la consommation énergétique est très élevée. On la compare pour cela à celle consommée par le four tournant actuellement utilisé et qui traite les matières premières à plus basse température que le four électrique et de plus a un excellent rendement thermique.

Notons qu'il a aussi l'inconvénient de dégager une grande quantité de gaz carbonique.

Dans un procédé selon l'invention les matières premières sont traitées directement et à chaud ce qui va donner l'occasion de récupérer une grande quantité d'énergie, et notamment l'énergie de fusion du laitier parce qu'on va l'utiliser en le gardant à l'état liquide, état qui est le sien à la sortie du réacteur métallurgique. Le procédé va enchaîner de manière directe toutes les opérations de façon à obtenir la valorisation maximale des sous produits sans avoir de consommation d'énergie supplémentaire, jusqu'à la fabrication directe des éléments préfabriqués en béton armé. Pour mettre en oeuvre ce procédé on a imaginé une installation qui, selon l'invention dispose de tous les équipements nécessaires sur un même site et qui permet justement la valorisation des produits intermédiaires en disposant des appareils nécessaires à cette valorisation.

Le procédé de préfabrication des éléments en béton armé selon l'invention comporte les caractéristiques de la revendication 1. C'est un procédé direct à partir de l'acier produit par un réacteur métallurgique alimenté en matières ferreuses et utilisant sensiblement la totalité du laitier résiduel produit.
Le laitier résiduel est utilisé à chaud à chaque coulée, éventuellement après quelques coulées, du réacteur métallurgique pour la fabrication d'un clinker de haute qualité. Selon l'invention ce clinker est obtenu dans un four électrique de réduction des oxydes et dans lequel on ajoute les matières minérales directement dans le bain liquide pour obtenir la composition recherchée.

Dans un procédé selon l'invention une économie importante est réalisée en maintenant le laitier à l'état liquide entre le réacteur métallurgique et le four électrique de réduction, une autre économie d'énergie ainsi qu'un accroissement significatif de la qualité du clinker sont réalisés selon l'invention en effectuant la granulation du laitier directement dans le dispositif de coulée. Enfin, et toujours selon l'invention, les matières d'addition ajoutées au four électrique de réduction sont avantageusement réchauffées par les gaz émis par le dit four électrique de réduction.

Une installation de préfabrication des éléments en béton armé selon l'invention permet la mise en oeuvre du procédé dans un ensemble d'équipements intégrés sur le même site industriel. Une telle installation selon l'invention comprend au moins :
- un réacteur métallurgique alimenté par des matières ferreuses et produisant de l'acier et une certaine quantité de laitier résiduel,
- au moins une machine de coulée continue de l'acier produisant des billettes,
- une installation de laminage susceptible de produire des ronds d'acier à partir des billettes,
- un récipient de récupération et de transfert du laitier,
- un four électrique de réduction des oxydes permettant de traiter le laitier, équipé d'un dispositif d'addition de matières minérales,
- un dispositif de granulation du clinker,
- un broyeur équipé d'un dispositif d'additions finales,
- un stockage de ciment,
- un ensemble de machines de fabrication d'éléments en béton armé alimenté par les ronds en aciers provenant du train de laminage et par le ciment stocké.

Ces équipements sont installés sur un même site et peuvent être connectés entre eux par les moyens de manutention et de transport adéquats pour réaliser de manière directe et continue les différentes étapes du procédé.

Selon l'invention le réacteur métallurgique de l'installation peut être un convertisseur d'aciérie ou bien un four électrique de fusion de ferrailles et de matières ferreuses.

Pour parvenir à un fonctionnement économique et à économiser l'énergie, on dispose, dans une installation selon l'invention, d'un récipient de récupération du laitier à la sortie du réacteur métallurgique muni d'un revêtement réfractaire de façon à maintenir à l'état liquide le laitier récupéré pendant sa collecte et son transport entre le dit réacteur métallurgique et le four électrique de réduction. Dans un mode de réalisation préférentiel de l'invention ce récipient peut d'ailleurs être constitué d'une cuve qui sert aussi de cuve au four électrique de réduction. Par ailleurs l'installation selon l'invention dispose d'un appareil d'addition de matières minérales dans le bain liquide de laitier monté sur le four électrique de réduction. Ces matières minérales sont de préférence réchauffées avant leur introduction dans le four et, selon une disposition particulière de l'invention, ce réchauffage peut être produit, au moins en partie, par un dispositif qui récupère la chaleur des gaz émis par le dit four électrique de réduction. Pour augmenter la qualité du clinker produit par le four électrique de réduction, et selon une disposition particulière de l'invention, un appareil de granulation du clinker est installé dans le dispositif de coulée du four électrique de réduction.

Mais l'invention sera mieux comprise par la description d'un mode de réalisation particulier.
La figure 1 représente schématiquement l'ensemble de l'installation intégrée permettant la mise en oeuvre du procédé direct.
La figure 2 représente en vue en coupe un récipient de récupération du laitier.
La figure 3 représente en vue en coupe un récipient de récupération du laitier servant aussi de cuve au four électrique de réduction.

Dans un mode de réalisation préférentiel le procédé de fabrication d'éléments préfabriqués en béton armé objet de l'invention associe au four électrique de fusion (1) d'une aciérie électrique un récipient (2) de récupération et de transfert du laitier (3), un four électrique de réduction (4), un équipement de conditionnement du laitier réduit, avec solidification (9) et broyage (10), les équipements de stockage d'additions (11, 19), de stockage du ciment (24), au moins une machine de coulée continue à billettes et un train à fil (25) et les installations de préfabrication d'éléments en béton armé (26).

Le four électrique de fusion (1) reçoit un chargement de matières ferreuses, comme par exemple des ferrailles, et effectue un cycle de production. Les principales phases de ce cycle que sont le chargement des matières ferreuses, la fusion, l'opération de décrassage du laitier concomitante à la surchauffe du bain d'acier, la coulée du métal et la préparation du four de fusion pour le cycle suivant, se succèdent et se répètent à chaque cycle. Mais le fonctionnement d'un four électrique de fusion est bien connu et n'a pas besoin de description plus détaillée.

Dans le procédé selon l'invention le laitier produit par un cycle de fabrication du four électrique est maintenu à l'état liquide dans le récipient (2) de récupération. Ce récipient est constitué d'une carcasse métallique rigide équipée de pieds pour pouvoir être posée sur un socle et de tourillons pour être soulevée par un pont roulant ou un transporteur automoteur. Il est fermé et muni d'un bec de coulée (15) et d'un couvercle possédant à la partie supérieure un orifice de remplissage (16). Ce récipient est garni de revêtement réfractaire (14,13) de manière à pouvoir conserver le laitier à l'état liquide. Selon l'invention le récipient de récupération (2) sert aussi de moyen de transport du laitier jusqu'au four de réduction (4) où il transporte directement le laitier à chaque cycle du four de fusion.

Dans une version améliorée de l'installation selon l'invention le récipient (2) de récupération du laitier sert aussi de cuve au four électrique de réduction. Le conteneur de transfert (2) vient alors se placer sous le couvercle (17) du four électrique de réduction (4) pour recevoir les électrodes de chauffage (18).

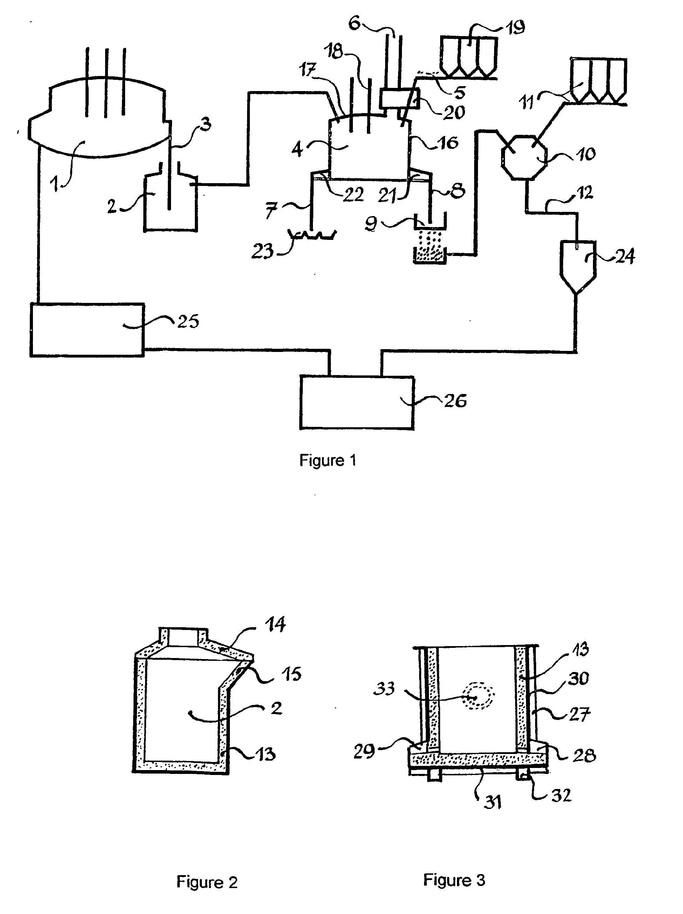

La figure 3 montre schématiquement la constitution d'un tel récipient. La structure métallique (27) avec renforts latéraux et inférieurs, une virole (30) et un fond (31), est conçue pour être rigide au cours du travail comme au cours du transport. La structure métallique est équipée de pieds (32) et de tourillons (33). Deux chenaux (28 et 29) sont disposés, par exemple diamétralement opposés, en partie inférieure de la structure métallique (27), l'un sert à la coulée du clinker, l'autre à celle du ferroalliage. La virole le fond et les chenaux sont garnis de matériaux réfractaires (13).

Selon l'un ou l'autre des modes de réalisations préférentiels décrits précédemment, ou selon tout autre mode de réalisation couvert par l'invention, le four électrique de réduction (4) reçoit le laitier (3) resté à l'état liquide, selon le procédé objet de l'invention cette étape permet d'éliminer les oxydes indésirables et d'ajuster sa composition par des additions minérales judicieuses (5).

La fabrication d'acier au four électrique de fusion (1) produit 5 à 15 tonnes de laitier (3) suivant la capacité de ce four, à chaque cycle de coulée ou cycle opératoire. Le laitier sort du four à la température de 1500°C. Une composition type de laitier (3) de four électrique de fusion (1) est donnée dans le tableau suivant : (tableau 1)

**Tableau - 1 -**

| Production d'acier au carbone et faiblement alliés | | | |
|---|---|---|---|
| Laitier du four électric ue de fusion | | | |
| Composant | Poids en % | Composant | Poids en % |
| Fetot | 10 - 32 | P₂O₅ | 0.01 - 0.6 |
| CaO | 25 - 45 | Na₂O | 0.46 |
| CaO_{libre} | <4 | K₂O | 0.11 |
| SiO₂ | 10 - 18 | V₂O₅ | 0.11 - 0.25 |
| Al₂O₃ | 3 - 8 | ZnO | 0.02 |
| MgO | 4 - 13 | CuO | 0.03 |
| MnO | 4 - 12 | NiO | 0.01 - 0.04 |
| Cr₂O₃ | 1 - 2 | S | 0.02 |
| TiO₂ | 0.3 | C | 0.33 |

Le tableau 2 ci-après montre en dernière colonne la composition habituelle d'un clinker obtenu au four tournant pour la fabrication du ciment. Le four électrique de réduction permet l'évolution de la composition du laitier vers cette composition souhaitée et le tableau 2 montre un exemple des additions nécessaires pour l'obtenir, en ce qui concerne les composants utiles à l'obtention des caractéristiques du ciment et du béton.

Dans le procédé selon l'invention le four électrique de réduction (4) et le dispositif d'addition de matières minérales (19) vont réaliser l'apport d'énergie fossile, par exemple du carbone, et l'apport d'énergie électrique nécessaires au processus de réduction qui font disparaître du laitier (3), l'oxyde de fer, l'oxyde de manganèse, l'oxyde de chrome et l'oxyde phosphorique dans des proportions importantes, supérieures à 85%. La composition du laitier (3) y est en même temps ajustable par addition de chaux, de silice ou d'alumine suivant la composition du clinker (8) recherché. L'ajustement du composant « oxyde de fer » se fait à l'issue de la phase réductrice.

**Tableau - 2 -**

| Composant en % | Laitier du four de fusion | Additions au four de réduction | Composition du clinker obtenu au four de réduction | Composition d'un clinker au four tournant |
|---|---|---|---|---|
| Nature | | | | |
| Oxyde de fer | 15 | | 0 | 0-5 |
| Chaux | 40 | 25 | 64 | 60-65 |
| Silice | 17 | 5 | 22 | 20-25 |
| Alumine | 8 | | 8 | 5-10 |
| Magnésie | 10 | | 10 | 5-10 |
| Oxyde de manganèse | 8 | | 1,5 | |
| Oxyde de phosphore | 0,4 | | 0 | |
| Oxyde de chrome | 0,8 | | 0,1 | |
| Alcalins | 0,5 | | 0,5 | 1 |
| Carbone | | 5 | | |

Dans une installation selon l'invention les matières d'additions sont préchauffées par un dispositif (20) qui est alimenté par les gaz (6) produits par le four électrique de réduction (4) lui-même.

Compte tenu des compositions variables du laitier d'aciérie du à la diversité des matières ferreuses introduites au four électrique de fusion il est nécessaire de contrôler en temps réel la composition du laitier obtenu de matière à réagir de manière directe sur les volumes des matières d'addition et la conduite du four électrique de réduction. Dans un procédé direct mis en oeuvre dans une installation intégrée objet de l'invention, le laboratoire de plate-forme de l'aciérie, dont les équipements existent ou sont similaires aux nouveaux besoins d'analyse, reçoit les échantillons prélevés dans le conteneur de transfert (2) et au four électrique de réduction (4) et effectue l'analyse dans le but de donner aux opérateurs les éléments nécessaires à la conduite du processus de réduction et à l'ajustement de la composition du clinker (8).

Dans une installation selon l'invention, et pour la bonne mise en oeuvre du procédé une batterie d'au moins quatre trémies de stockage de matières minérales (19) est associée au four électrique de réduction (4) pour recevoir les composants (5) à ajouter au laitier (3), pendant ou après la phase de réduction pour obtenir la composition du clinker (8) recherché. Ces quatre trémies (19) sont dédiées à la chaux, la silice, l'alumine et le minerai de fer. Dans un mode de réalisation préférentiel on peut par exemple prévoir le réchauffage de ces matières d'addition (19) par les gaz (6) émis par le four électrique de réduction (4) lorsqu'elles sont sur leurs convoyeurs d'alimentation (5) au four électrique de réduction (4) dans un équipement de préchauffage (20). Les gaz (6) sont captés, refroidis et épurés dans une installation de filtration. Le débit des gaz dépend de la quantité d'oxydes à réduire et de la composition du clinker recherché.

A la fin du cycle de réduction, le four électrique de réduction (4) contient deux liquides différents, un ferroalliage (7) qui représente 15 à 25% du total en poids, composé métallique de densité 6 à 7, et le clinker (8) qui représente 75 à 85% du total en poids, de densité 2 à 2,5. Le ferroalliage (7) (principalement composé de fer et de manganèse) constitue un sous produit de la réduction du laitier que le marché de la sidérurgie peut absorber sous forme de gueuse, de plaques ou de granules.

Le clinker (8) est coulé à la sortie du four électrique de réduction (4) ou il subit une granulation ou une coulée sur plaque et un concassage ; la granulation (9) facilite l'opération suivante de broyage (10) au cours de laquelle les derniers ajouts, extraits des trémies de stockage (11), sont effectués pour obtenir le ciment (12) désiré.

Les coulées du clinker (8) et celle du ferroalliage (7) se font par des trous de coulée en charge et des chenaux (21 et 22), de préférence de part et d'autre de la cuve du four électrique de réduction (4). La coulée du clinker (8) se fait, selon l'invention, dans une installation de granulation (9) qui donne des particules de 1 à 10 mm de dimension. La coulée du ferroalliage (7) se fait, par exemple, dans des moules métalliques (23) qui permettent d'obtenir des gueuses de 10 à 25 kg.

Le broyeur (10), par exemple de type à boulets, transforme le clinker (8) et les additions finales (11) qui lui sont mélangées à ce stade de la fabrication, en ciment (12) d'une composition donnée, envoyé pour stockage dans des silos (24).

Les équipements de fabrication du rond à béton (25) comprennent au moins une machine de coulée continue à billettes et une installation de laminage de type train à fil. Compte tenu des volumes respectifs produits en acier d'une part et en laitier d'aciérie d'autre part, l'installation comprendra avantageusement d'autres machines de coulée et de coulée continue et d'autres installations de transformation de l'acier, en particulier des installations de laminage. Les équipements (26) de préfabrication des éléments en béton armé sont conventionnels, centrale à béton, moules, engins de manutention et dispositifs de stockage et sont situés à proximité immédiate de la production de rond à béton et de ciment pour optimiser les coûts et délais de fabrication. Tous ces équipements sont parfaitement connus et il n'est pas nécessaire de les décrire d'avantage.

Le procédé de préfabrication directe d'éléments en béton armé nécessite une consommation électrique qui est fonction de la quantité d'oxydes à réduire et de la composition du clinker (8) recherché. Elle est de 250 à 600 kWh par tonne de laitier traité.

Le procédé de préfabrication directe d'éléments en béton armé et l'installation intégrée permettant sa mise en oeuvre, objets de l'invention ont impact positif considérable sur l'environnement. Une étude d'écobilan, comparant la fabrication conventionnelle de rond à béton et d'éléments préfabriqués suivant le mode conventionnel ( four tournant pour le clinker, aciérie électrique pour le rond à béton et atelier de préfabrication) et suivant le mode de fabrication objet du présent brevet (aciérie électrique pour le rond à béton avec four de réduction pour le clinker et atelier de préfabrication) fait apparaître les avantages repris dans le tableau 3 au bénéfice de l'invention.

**Tableau - 3 -**

| Modification des caractéristiques de production de 1000 unités de rond à béton et de 1000 unités d'éléments préfabriqués. | |
|---|---|
| Exploitation des ressources naturelles | - 3,5 % |
| Production mise sur le marché | + 3 % |
| Déchets mis en décharge | - 36 % |
| Gaz émis à l'atmosphère (CO2) | - 22 % |
| Energie électrique consommée | + 1,5 % |

Pour une production d'éléments préfabriqués mis sur le marché supérieur de 3%, la consommation de ressources naturelles est inférieure de 3,5% et celle d'énergie électrique est équivalente ; l'émission des éléments directement polluants est réduite de 36% pour les matières solides et de 22% pour les matières gazeuses.
Bien entendu l'invention ne se limite pas aux détails des modes de réalisation qui ont été décrits à titre d'exemple, d'autres dispositions équivalentes pouvant être imaginées sans s'écarter du cadre de protection défini par les revendications.
En particulier différentes variétés de réacteur métallurgique produisant de l'acier et un laitier résiduel à partir de matières ferreuses ou différents types de récipients et de modes de transport du laitier pour une utilisation directe dans un four électrique de réduction des oxydes métalliques.

## Revendications

1. Procédé de préfabrication directe d'éléments en béton armé à partir de l'acier produit par un réacteur métallurgique chargé de matières ferreuses et en utilisant sensiblement la totalité du laitier résiduel produit pour fabriquer un clinker intermédiaire et le ciment de composition voulue, procédé dans lequel les opérations de fabrication sont enchaînées directement depuis la fabrication de l'acier et du laitier jusqu'à celle des éléments en béton armé.

2. Procédé de préfabrication directe d'éléments en béton armé à partir de l'acier produit par un réacteur métallurgique et de la totalité du laitier résiduel **caractérisé en ce que** le laitier est utilisé à chaud pour la fabrication d'un clinker intermédiaire.

3. Procédé de préfabrication directe d'éléments en béton armé selon la revendication 2 **caractérisé en ce que** le laitier est maintenu liquide entre le réacteur métallurgique et le four électrique de réduction.

4. Procédé de préfabrication directe d'éléments en béton armé selon la revendication 3 **caractérisé en ce que** les gaz émis par le four électrique de réduction sont utilisés pour le préchauffage des matières minérales d'addition introduites dans ce dit four électrique de réduction.

5. Installation intégrée de préfabrication d'éléments en béton armé comprenant au moins :
- un réacteur métallurgique alimenté par des matières ferreuses et produisant de l'acier et une certaine quantité de laitier résiduel,
- au moins une machine de coulée continue de l'acier produisant des billettes,
- une installation de laminage susceptible de produire des ronds d'acier à partir des billettes,
- un récipient de récupération et de transfert du laitier,
- un four électrique de réduction des oxydes permettant de traiter le laitier, équipé d'un dispositif d'addition de matières minérales,
- un dispositif de granulation du clinker,
- un broyeur équipé d'un dispositif d'additions finales,
- un stockage de ciment,
- un ensemble de machines de fabrication d'éléments en béton armé alimenté par les ronds en aciers provenant du train de laminage et par le ciment stocké.

6. Installation intégrée de préfabrication d'éléments en béton armé selon la revendication 5 **caractérisée en ce que** le réacteur métallurgique est un four électrique de fusion.

7. Installation intégrée de préfabrication d'éléments en béton armé selon l'une des revendications 5 ou 6 **caractérisée en ce que** le récipient de récupération du laitier est isolé thermiquement par un revêtement réfractaire capable de maintenir liquide le laitier d'aciérie pendant son transport au four électrique de réduction.

8. Installation intégrée de préfabrication d'éléments en béton armé selon la revendication 5 **caractérisée en ce que** le récipient de récupération du laitier sert de cuve au four électrique de réduction.

9. Installation intégrée de préfabrication d'éléments en béton armé selon la revendication 5 **caractérisée par** un dispositif de réchauffage des matières minérales d'addition récupérant les gaz du dit four électrique de réduction.

## Claims

1. Method for the direct prefabrication of reinforced concrete elements starting from steel produced by a metallurgical reactor charged with ferrous materials and using substantially all the residual slag produced to manufacture an intermediate clinker and the cement of the required composition, in which method the manufacturing operations are linked directly from the manufacture of the steel and slag to that of the reinforced concrete elements.

2. Method for the direct prefabrication of reinforced concrete elements starting from steel produced by a metallurgical reactor and all the residual slag, **characterized in that** the slag is used in the hot state for manufacture of an intermediate clinker.

3. Method for the direct prefabrication of reinforced concrete elements according to claim 2, **characterized in that** the slag is kept in the liquid state between the metallurgical reactor and the electrical reduction furnace.

4. Method for the direct prefabrication of reinforced concrete elements according to claim 3, **characterized in that** the gases emitted by the electric reduction furnace are used to preheat the additional mineral materials introduced into said electric reduction furnace.

5. Integrated installation for prefabrication of reinforced concrete elements, comprising at least:
- a metallurgical reactor fed by ferrous materials and producing steel and a certain amount of residual slag,
- at least one machine for continuous casting of the steel producing billets,
- a rolling installation which can produce steel rounds from the billets,
- a receptacle for recovery and transfer of the slag,
- an electric furnace for reduction of oxides, enabling treatment of the slag, equipped with a device for addition of mineral materials,
- a device for granulation of the clinker,
- a grinder equipped with a device for final additions,
- a cement store,
- a system of machines for manufacture of reinforced concrete elements fed with the steel rounds originating from the rolling train and with the cement stored.

6. Integrated installation for prefabrication of reinforced concrete elements according to claim 5, **characterized in that** the metallurgical reactor is an electric fusion furnace.

7. Integrated installation for prefabrication of reinforced concrete elements according to one of claims 5 or 6, **characterized in that** the receptacle for recovery of the slag is thermally insulated by a refractory coating capable of keeping the slag from the steel works liquid during its transportation to the electric reduction furnace.

8. Integrated installation for prefabrication of reinforced concrete elements according to claim 5, **characterized in that** the receptacle for recovery of the slag serves as the cuvette for the electric reduction furnace.

9. Integrated installation for prefabrication of reinforced concrete elements according to claim 5, **characterized by** a device for reheating the additional mineral materials which recovers the gases of the said electric reduction furnace.

## Patentansprüche

1. Verfahren zur direkten Vorfertigung von Elementen aus armiertem Beton,ausgehend von Stahl, der von einem mit eisenartigen Stoffen beladenen metallurgischen Reaktor produziert wird, und unter Verwendung von im Wesentlichen der Gesamtheit der produzierten Restschlacke, um einen Zwischenschrittklinker und den Zement der gewünschten Zusammensetzung herzustellen, wobei während des Verfahrens die Herstellungsvorgänge direkt aufeinanderfolgend sind, von der Herstellung des Stahls und der Schlacke bis hin zu jener der Elemente aus armierten Beton.

2. Verfahren zur direkten Vorfertigung von Elementen aus armierten Beton, ausgehend von einem Stahl, der in einem metallurgischen Reaktor produziert wird, und von der Gesamtheit der Restschlacke, **dadurch gekennzeichnet, dass** die Schlacke für die Herstellung eines Zwischenschrittklinkers heiß verwendet wird.

3. Verfahren zur direkten Vorfertigung von Elementen aus armierten Beton nach Anspruch 2, **dadurch gekennzeichnet, dass** die Schlacke zwischen dem metallurgischen Reaktor und dem elektrischen Reduktionsofen flüssig gehalten wird.

4. Verfahren zur direkten Vorfertigung von Elementen aus armiertem Beton nach Anspruch 3, **dadurch gekennzeichnet, dass** die von dem elektrischen Reduktionsofen emittierten Gase für die Vorheizung von mineralischen Zusatzstoffen verwendet werden, die in den elektrischen Reduktionsofen eingebracht werden.

5. Integrierte Anlage zur Vorfertigung von Elementen aus armierten Beton, umfassend zumindest:
- einen metallurgischen Reaktor, der mit eisenartigen Stoffen beschickt wird und der Stahl sowie eine gewisse Menge Restschlacke produziert,
- zumindest eine Strangießmaschine für Stahl, die Knüppel produziert,
- ein Walzwerk, das geeignet ist, Rundstahle aus den Knüppeln zu produzieren,
- ein Rückgewinnungs- und Transferbehältnis für die Schlacke,
- einen elektrischen Oxidreduktionsofen, der es erlaubt, die Schlacke zu verarbeiten und der mit einer Einrichtung zum Hinzufügen von mineralischen Stoffen ausgerüstet ist,
- eine Granuliereinrichtung für den Klinker,
- einen Zerkleinerer, der mit einer Vorrichtung für finale Zusatzstoffe ausgerüstet ist,
- eine Zementaufbewahrung,
- ein Ensemble von Maschinen zur Herstellung von Elementen aus armierten Beton, das mit den aus dem Walzwerk stammenden Rundstahlen und dem gelagerten Zement beschickt wird.

6. Integrierte Anlage zur Vorfertigung von Elementen aus armierten Beton nach Anspruch 5, **dadurch gekennzeichnet, dass** der metallurgische Reaktor ein elektrischer Schmelzofen ist.

7. Integrierte Anlage zur Vorfertigung von Elementen aus armierten Beton nach einem der Ansprüche 5 oder 6 **dadurch gekennzeichnet, dass** das Rückgewinnungsbehältnis für die Schlacke thermisch isoliert ist durch eine feuerfeste Beschichtung, die geeignet ist, die Schlacke des Stahlwerks während ihres Transports zum elektrischen Reduktionsofen flüssig zu halten.

8. Integrierte Anlage zur Vorfertigung von Elementen aus armierten Beton nach Anspruch 5, **dadurch gekennzeichnet, dass** das Rückgewinnungsbehältnis für die Schlacke im elektrischen Reduktionsofen als Pfanne dient.

9. Integrierte Anlage zur Vorfertigung von Elementen aus armierten Beton nach Anspruch 5, **gekennzeichnet durch** eine Einrichtung zum Wiedererwärmen von mineralischen Zusatzstoffen, die die Gase des elektrischen Reduktionsofens zurückgewinnt.
